# EUROPEAN PATENT SPECIFICATION

(11) **EP 1 127 852 B1**
(45) Date of publication and mention of the grant of the patent: **20.04.2005**
(21) Application number: 01103871.8
(22) Date of filing: 16.02.2001
(51) Int. Cl.: C03B 9/16

(54) **Inverter unit for a machine for molding glass articles**
Umdrehmechnismus für eine Maschine zur Herstellung von Glaswaren
Méchanisme d' inversion pour une machine de fabrication d' objets en verre

(30) Priority: 22.02.2000 IT TO000165
(43) Date of publication of application: 29.08.2001
(73) Proprietor: BOTTERO S.p.A., 12010 Cuneo (IT)
(72) Inventor: Sesia, Carlo, 12011 Borgo San Dalmazzo (IT); Borsarelli, Gianclaudio, 12100 Cuneo (IT)
(74) Representative: Franzolin, Luigi

(56) References cited:
- US-A- 3 617 233
- US-A- 4 842 636

## Description

The present invention relates to an inverter unit for a machine for molding glass articles.

More specifically, the present invention relates to a so-called I.S. molding machine comprising a number of molding sections, each of which in turn comprises a parison mold, a finish mold, and an inverter unit between the parison and finish molds. The inverter unit comprises a pickup arm, which grips the parison formed in the parison mold, and rotates about a horizontal axis to transfer the parison to the finish mold. The pickup arm is normally rotated about the horizontal axis by a drive assembly comprising a motor and a gear transmission interposed between the motor and the arm.

Though widely used, known inverter units of the above type inevitably involve a certain amount of slack, which, despite every effort at the manufacturing stage, remains after installation and increases with use. The presence of such slack poses various problems, both when picking up and inserting the particle inside the finish mold, and may result in damage to the parison and therefore in poor quality of the finished product. What is more, known inverter units comprise a relatively large number of components and, in particular, moving parts which, when started, generate fairly strong forces of inertia, thus increasing response time and impairing the output rate.

US 4,842,636 discloses an inverter neck ring mechanism in which a pair of arm holders are rotated by a hydraulic actuator assembly. The prior art portion of claim 1 is based on this document.

It is an object of the present invention to provide an inverter unit designed to provide a straightforward, low-cost solution to the problems typically associated with the known state of the art.

According to the present invention, there is provided an inverter unit for a machine for molding glass articles, as claimed in Claim 1.

A non-limiting embodiment of the present invention will be described by way of example with reference to the accompanying drawings, in which:
Figure 1 shows a view in perspective of a preferred embodiment of the inverter unit according to the invention;
Figure 2 shows a section, with parts removed for clarity, of the Figure 1 unit.

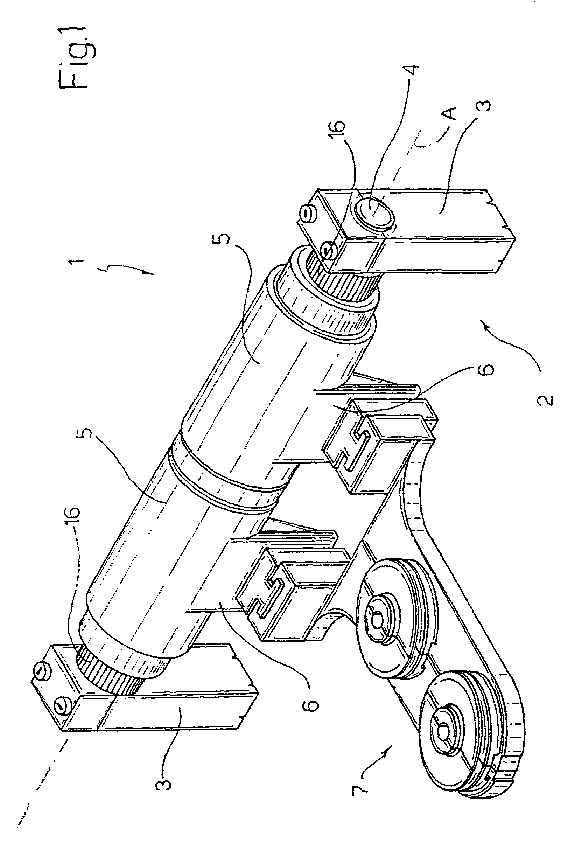

Number 1 in Figure 1 indicates an inverter unit for a so-called I.S. machine (not shown) for molding glass articles. Unit 1 provides for successively transferring one or more parisons (not shown) from a parison mold (not shown), by which the parison are formed, to a finish mold (not shown), and comprises a supporting frame 2 fitted to a frame of the molding machine (not shown) and in turn comprising two uprights 3, and a crosspiece 4 extending along a substantially horizontal axis A.

Unit 1 also comprises two side by side, substantially cylindrical, tubular bodies 5 coaxial with axis A and surrounding crosspiece 4. Tubular bodies 5 carry respective attachments 6 formed in one piece with respective tubular bodies 5, projecting from the respective tubular bodies in a direction perpendicular to axis A, and fitted with respective known pickup members 7 (not described in detail) for engaging the parisons for transfer.

Bodies 5 are rotated about axis A and with respect to crosspiece 4 by an electric motor 8 surrounding crosspiece 4 and housed between crosspiece 4 and bodies 5.

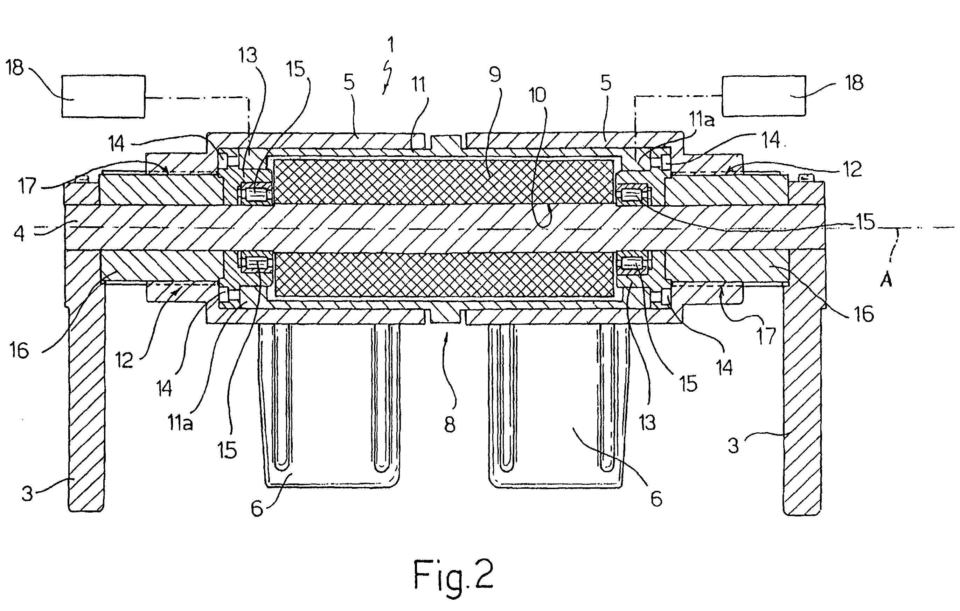

As shown in Figure 2, motor 8 is supported by crosspiece 4 and comprises a hollow stator 9 having a central hole 10 engaged in fixed manner by crosspiece 4; and a hollow rotor 11 housing stator 9.

As shown in Figure 2, unit 1 comprises two tubular connecting members 12, which surround crosspiece 4 at opposite ends of stator 9, are free to rotate about crosspiece 4, and connect rotor 11 to tubular bodies 5 to transmit rotation of the rotor.

More specifically, each connecting member 12 comprises an annular portion 13 fixed to a respective end 11a of rotor 11 by means of a number of screws 14, and connected to crosspiece 4 by means of two bearings 15; and a splined portion 16 connected integrally to respective annular portion 13, and connected to a splined portion of a respective tubular body 5 to define a splined coupling 17.

Splined couplings 17 enable tubular bodies 5 to rotate in unison with rotor 11 with substantially no angular slack, and to translate axially with respect to each other and with respect to rotor 11 by virtue of respective pneumatic linear actuators 18.

By rotor 11 being connected directly to tubular bodies 5, i.e. with no mechanical gear transmissions, inverter unit 1 as described therefore ensures a high degree of efficiency and reliability in transferring the parisons from the rough mold to the finish mold, thus eliminating the need for continual slack take-up adjustments and, above all, eliminating rejects and so greatly reducing cost.

Again by rotor 11 being connected directly to tubular bodies 5, inverter unit 1 described comprises a smaller number of components and moving parts, and therefore has much faster response times as compared with known solutions.

Clearly, changes may be made to inverter unit 1 as described herein without, however, departing from the scope of the accompanying Claims.

For example, members 12 may be dispensed with and rotor 11 connected rigidly to at least one of tubular bodies 5; the other tubular body 5, if provided, may be connected in axially sliding manner to rotor 11 by means of one or more keys interposed between rotor 11 and body 5; and, finally, as opposed to being housed inside tubular bodies 5, rotor 11 may extend outside tubular bodies 5, e.g. coaxially with axis A.

## Claims

1. An inverter unit (1) for a machine for molding glass articles, the unit (1) comprising a supporting frame (2); at least one rotary member (5) connected to the frame to rotate about a hinge axis (A) and transfer parisons from a parison mold to a finish mold; and a motor (8) for powering said rotary member (5) and comprising a rotor (11); said rotary member (5) being connected directly to said rotor (11) to rotate in unison with the rotor (11); **characterized in that** said rotary member (5) is a hollow member and at least partly houses said rotor (11); and said motor (8) comprises a stator (9) housed at least partly inside said rotor (11).

2. A unit as claimed in Claim 1, **characterized in that** said stator (9) is an axially hollow stator fitted through with a supporting member (4) of said frame (2).

3. A unit as claimed in any one of the foregoing Claims, **characterized by** comprising two said rotary members (5) arranged side by side along said axis (A); each said rotary member (5) being connected to said rotor (11) in angularly fixed manner about said axis (A).

4. A unit as claimed in Claim 3, **characterized in that** both said rotary members (5) are connected to said rotor (11) in angularly fixed manner and in axially sliding manner with respect to each other.

5. A unit as claimed in Claim 4, **characterized by** comprising connecting means (12) for connecting at least one of said rotary members (5) to the rotor (11) in angularly fixed and axially sliding manner with respect to the rotor (11).

6. A unit as claimed in Claim 5, **characterized in that** said connecting means (12) comprise at least one splined shaft (16).

7. A unit as claimed in Claim 6, **characterized in that** said splined shaft (16) is separate from said rotor (11) and connected to the rotor coaxially with said axis (A).

## Patentansprüche

1. Inverter-Einheit (1) für eine Maschine zum Formen von Glas-Gegenständen, wobei die Einheit (1) aufweist: einen Halte-Rahmen (2), mindestens ein drehbares Element (5), das mit dem Rahmen gekuppelt ist, so dass es um eine Schwenkachse (A) rotiert und Vorformlinge von einer Vorformling-Form zu einer End-Form transportiert, und einen Motor (8) zum Antreiben des drehbaren Elements (5). der einen Rotor (11) aufweist, wobei das drehbare Element (5) direkt mit dem Rotor (11) verbunden ist, so dass es im Einklang mit dem Rotor (11) rotiert, **gekennzeichnet dadurch, dass** das drehbare Element (5) ein Hohl-Element ist und mindestens teilweise den Rotor (11) aufnimmt, und wobei der Motor (8) einen Stator (9) aufweist, der mindestens teilweise innerhalb des Rotors (11) untergebracht ist.

2. Einheit nach Anspruch 1, **dadurch gekennzeichnet, dass** der Stator (9) ein axial hohler Stator ist, durch den ein Halte-Element (4) des Rahmens (2) hindurchgepasst ist.

3. Einheit nach einem der vorhergehenden Ansprüche, **dadurch gekennzeichnet, dass** sie zwei derartige drehbare Elemente (5) aufweist, die Seite an Seite entlang der Achse (A) angeordnet sind, wobei jedes der drehbaren Elemente (5) mit dem Rotor (11) in winkelfester weise um die Achse (A) herum gekuppelt ist.

4. Einheit nach Anspruch 3, **dadurch gekennzeichnet, dass** die beiden drehbaren Elemente (5) mit dem Rotor (11) in winkelfester Weise und relativ zueinander axial gleitend bewegbar gekuppelt sind.

5. Einheit nach Anspruch 4, **dadurch gekennzeichnet, dass** sie Kupplungsmittel (12) aufweist zum Kuppeln von mindestens einem der drehbaren Elemente (5) mit dem Rotor (11) in winkelfester Weise und bezüglich des Rotors (11) axial gleitend bewegbar.

6. Einheit nach Anspruch 5, **dadurch gekennzeichnet, dass** die Verbindungsmittel (12) mindestens einen Keilwellenschaft (16) aufweisen.

7. Einheit nach Anspruch 6, **dadurch gekennzeichnet, dass** der Keilwellenschaft (16) getrennt von dem Rotor (11) ist und mit dem Rotor koaxial zur Achse (A) gekuppelt ist.

## Revendications

1. Unité d'inversion (1) pour une machine de moulage d'articles en verre, l'unité (1) comprenant un châssis de support (2); au moins un élément rotatif (5) relié au châssis pour tourner autour d'un axe d'articulation (A) et transférer des ébauches d'un moule d'ébauche à un moule finisseur; et un moteur (8) pour actionner ledit élément rotatif (5) et comprenant un rotor (11), ledit élément rotatif (5) étant relié directement audit rotor (11) pour tourner en même temps que le rotor (11); **caractérisée en ce que** ledit élément rotatif (5) est un élément creux et loge au moins partiellement ledit rotor (11); et ledit moteur (8) comprend un stator (9) logé au moins partiellement à l'intérieur dudit rotor (11).

2. Unité telle que revendiquée dans la revendication 1, **caractérisée en ce que** ledit stator (9) est un stator axialement creux assemblé en travers avec un élément de support (4) dudit châssis (2).

3. Unité telle que revendiquée dans l'une quelconque des revendications précédentes, **caractérisée par le fait qu'**elle comprend deux éléments rotatifs (5) ménagés côte à côte le long dudit axe (A), chaque élément rotatif (5) étant relié audit rotor (11) angulairement d'une manière fixe autour dudit axe (A).

4. Unité telle que revendiquée dans la revendication 3, **caractérisée en ce que** les deux éléments rotatifs (5) sont reliés audit rotor (11) angulairement d'une manière fixe et axialement d'une manière coulissante l'un par rapport à l'autre.

5. Unité telle que revendiquée dans la revendication 4, **caractérisée en ce qu'**elle comprend des moyens de connexion (12) pour relier au moins un desdits éléments rotatifs (5) au rotor (11) d'une manière angulairement fixe et axialement coulissante par rapport au rotor (11).

6. Unité telle que revendiquée dans la revendication 5, **caractérisée en ce que** lesdits moyens de connexion (12) comprennent au moins un arbre cannelé(16).

7. Unité telle que revendiquée dans la revendication 6, **caractérisée en ce que** ledit arbre cannelé (16) est distinct dudit rotor (11) et relié coaxialement à ce rotor par ledit axe (A).
